# EUROPEAN PATENT APPLICATION

(11) **EP 4 703 703 A1**
(43) Date of publication of application: **04.03.2026**
(21) Application number: 25190199.7
(22) Date of filing: 17.07.2025
(51) Int. Cl.: G01M 17/007

(54) **SYSTEM AND CONTROL METHOD**

(30) Priority: 29.08.2024 JP 2024147407
(71) Applicant: TOYOTA JIDOSHA KABUSHIKI KAISHA, Toyota-shi, Aichi-ken 471-8571 (JP)
(72) Inventor: IWAHORI, Kento, Toyota-shi, 471-8571 (JP); SHIMIZU, Koji, Toyota-shi, 471-8571 (JP); KOYAMA, Keisuke, Toyota-shi, 471-8571 (JP); KOIDE, Toshihiro, Toyota-shi, 471-8571 (JP); NAGAFUCHI, Yuhei, Toyota-shi, 471-8571 (JP); NAMMIYO, Rei, Toyota-shi, 471-8571 (JP)
(74) Representative: J A Kemp LLP

(57) **Abstract**

A system includes a vehicle, inspection equipment, a detector, and a control device. The vehicle is runnable by unmanned driving. The inspection equipment includes a roller that is rotatable while supporting a wheel of the vehicle. The detector detects abnormality of at least one of the vehicle and the inspection equipment. During inspection in which one of the wheel and the roller is drivingly rotated to followingly rotate another one of the wheel and the roller, when abnormality that rotation of the another one of the wheel and the roller stops is detected, the control device decelerates rotation of the one of the wheel and the roller.

## Description

### CROSS REFERENCE TO RELATED APPLICATIONS

This application claims priority to Japanese Patent Application No. 2024-147407, filed August 29, 2024, the disclosure of which is incorporated by reference herein in its entirety.

### BACKGROUND

### FIELD

The present disclosure relates to a system and a control method.

In a known technology, a vehicle is caused to run by unmanned driving during a production step of the vehicle (for example, Japanese Patent Application Publication (Translation of PCT Application) No. 2017-538619).

Inspection in which a wheel is rotated on a roller without moving a vehicle may be performed. For example, in inspection of a driving device of a vehicle, driving rotation of a wheel may cause a roller to followingly rotate, and in inspection of a braking device of a vehicle, driving rotation of a roller may cause a wheel to followingly rotate. During the inspection in which driving rotation of the wheel causes the roller to followingly rotate, for example, in a case in which rotation of the roller is locked due to biting of a foreign matter, driving power of the wheel may cause a vehicle to fall out of the roller. During the inspection in which driving rotation of the roller causes the wheel to followingly rotate, for example, in a case in which rotation of the wheel is locked due to unintended switching of a shift position of a vehicle to a parking range, driving power of the roller may cause the vehicle to fall out of the roller. Therefore, there is a need for a technology to suppress a vehicle under inspection falling out of a roller.

### SUMMARY

The present disclosure is achievable as the following aspects.
(1) According to a first aspect of the present disclosure, a system is provided. The system includes a vehicle, inspection equipment, a detector, and a control device. The vehicle is runnable by unmanned driving. The inspection equipment includes a roller that is rotatable while supporting a wheel of the vehicle. The detector detects abnormality of at least one of the vehicle and the inspection equipment. During inspection in which one of the wheel and the roller is drivingly rotated to followingly rotate another one of the wheel and the roller, when abnormality that rotation of the another one of the wheel and the roller stops is detected, the control device decelerates rotation of the one of the wheel and the roller.
   With the system according to this aspect, it can be suppressed that the vehicle under inspection falls out of the roller.
(2) In the system of the above-described aspect, during inspection in which the wheel is drivingly rotated to followingly rotate the roller, when abnormality that rotation of the roller stops is detected, the control device may stop driving of the wheel.
   With the system according to this aspect, it can be suppressed that, during inspection in which the wheel is drivingly rotated to followingly rotate the roller, the vehicle falls out of the roller.
(3) In the system of the above-described aspect, during inspection in which the roller is drivingly rotated to followingly rotate the wheel, when abnormality that rotation of the wheel stops is detected, the control device may stop rotation of the roller.
   With the system according to this aspect, it can be suppressed that, during inspection in which the roller is drivingly rotated to followingly rotate the wheel, the vehicle falls out of the roller.
(4) According to a second aspect of the present disclosure, a control method is provided. The control method includes detecting abnormality of at least one of a vehicle and inspection equipment. The vehicle is runnable by unmanned driving. The inspection equipment includes a roller that is rotatable while supporting a wheel of the vehicle. During inspection in which one of the wheel and the roller is drivingly rotated to followingly rotate another one of the wheel and the roller, when abnormality that rotation of the another one of the wheel and the roller stops is detected, rotation of the one of the wheel and the roller is decelerated.

With the control method according to this aspect, it can be suppressed that the vehicle under inspection falls out of the roller.

The present disclosure can be implemented also in various aspects other than the system and the control method. For example, the present disclosure can be implemented in aspects, such as a vehicle, a server device, inspection equipment, a computer program, and a recording medium recording a computer program.

### BRIEF DESCRIPTION OF THE DRAWINGS

Fig. 1 is an explanatory diagram illustrating a configuration of a system according to a first embodiment;
Fig. 2 is an explanatory diagram illustrating a configuration of a vehicle according to the first embodiment;
Fig. 3 is an explanatory diagram illustrating a configuration of a server device according to the first embodiment;
Fig. 4 is an explanatory diagram illustrating a configuration of inspection equipment according to the first embodiment;
Fig. 5 is an explanatory diagram illustrating a vehicle running by remote control;
Fig. 6 is a flowchart illustrating a procedure for running control of the vehicle according to the first embodiment;
Fig. 7 is an explanatory diagram illustrating a drive inspection;
Fig. 8 is a flowchart illustrating a procedure for falling-out prevention control during the drive inspection;
Fig. 9 is an explanatory diagram illustrating a brake inspection;
Fig. 10 is a flowchart illustrating a procedure for falling-out prevention control during the brake inspection;
Fig. 11 is an explanatory diagram illustrating a configuration of a system according to a second embodiment;
Fig. 12 is an explanatory diagram illustrating a configuration of a vehicle according to the second embodiment; and
Fig. 13 is a flowchart illustrating a procedure for running control of the vehicle according to the second embodiment.

### DETAILED DESCRIPTION

### A. First Embodiment

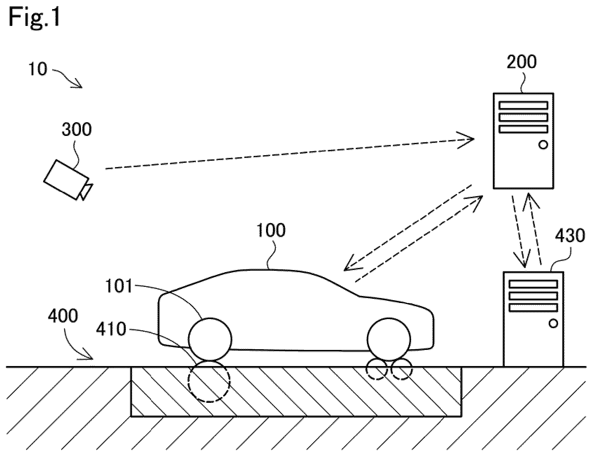

Fig. 1 is an explanatory diagram illustrating a configuration of a system 10 according to a first embodiment. The system 10 includes a vehicle 100, a server device 200, an external sensor 300, and inspection equipment 400. Note that in this embodiment, the server device 200 corresponds to a "control device" according to the present disclosure, and a wheel speed sensor 140 and a rotational speed sensor 450 described later correspond to a "detector" according to the present disclosure.

In this embodiment, the vehicle 100 is a four-wheeled electric vehicle (BEV: battery electric vehicle). The vehicle 100 may be a passenger vehicle, or may be a bus, a truck, or the like. A driving method of the vehicle 100 may be a front-wheel drive or may be a rear-wheel drive, a four-wheel drive, or the like. Note that the vehicle 100 is not limited to be an electric vehicle, but may be a gasoline vehicle, a hybrid vehicle, a fuel-cell vehicle, or the like. The vehicle 100 is not limited to be a four-wheeled vehicle, but may be a three-wheeled vehicle, a six-wheeled vehicle, or the like.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

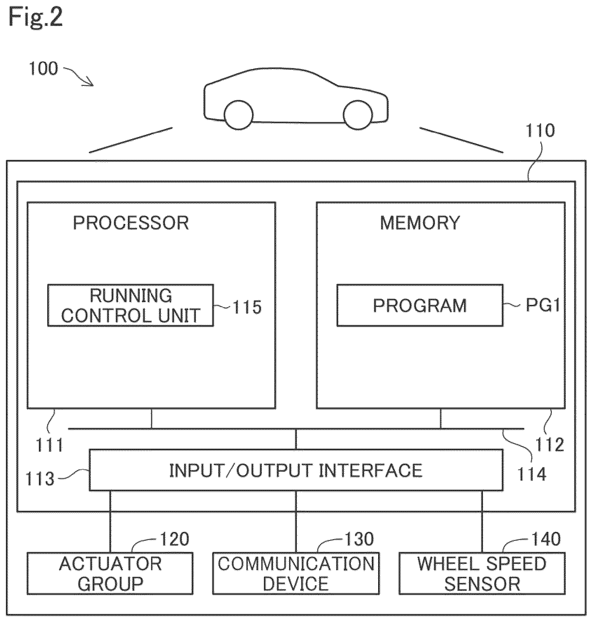

Fig. 2 is an explanatory diagram illustrating a configuration of the vehicle 100. The vehicle 100 includes four wheels 101. The four wheels 101 include left and right front wheels in a pair and left and right rear wheels in a pair. The vehicle 100 includes a vehicle control device 110 that controls each part of the vehicle 100, an actuator group 120 that performs driving under control of the vehicle control device 110, a communication device 130 to communicate with an external device, and the wheel speed sensor 140 to detect rotational speed of the wheel 101. The actuator group 120 includes an actuator for a driving device, an actuator for a steering device, and an actuator for a braking device. The driving device generates propulsion force of the vehicle 100. The steering device changes a traveling direction of the vehicle 100. The braking device generates braking force of the vehicle 100.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120, the communication device 130, and the wheel speed sensor 140 are coupled to the input/output interface 113. The communication device 130 communicates with the server device 200 by wireless communication. Note that the communication device 130 may communicate with the external sensor 300 and/or the inspection equipment 400 by wireless communication.

The processor 111 executes a computer program PG1 stored in the memory 112 in advance, thus functioning as a running control unit 115. In a case in which there is an occupant in the vehicle 100, the running control unit 115 can control the actuator group 120 in accordance with operation by the occupant to cause the vehicle 100 to run. Regardless of presence of an occupant in the vehicle 100, the running control unit 115 can control the actuator group 120 by using a running control signal received from the server device 200 to cause the vehicle 100 to run. In this embodiment, the running control signal includes, as parameters, acceleration and a steering angle of the vehicle 100. Note that the running control signal may include, alternative to or in addition to the acceleration of the vehicle 100, a speed of the vehicle 100 as a parameter.

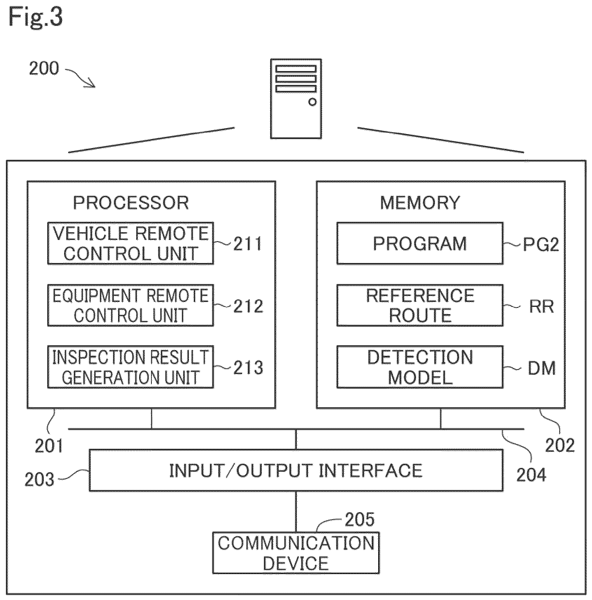

Fig. 3 is an explanatory diagram illustrating a configuration of the server device 200. The server device 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 that communicates with an external device is coupled to the input/output interface 203. In this embodiment, the communication device 205 communicates with the vehicle 100 by wireless communication and communicates with the external sensor 300 and the inspection equipment 400 by wired or wireless communication.

The processor 201 executes a computer program PG2 stored in the memory 202 in advance, thus functioning as a vehicle remote control unit 211 that remotely controls the vehicle 100, an equipment remote control unit 212 that remotely controls the inspection equipment 400, and an inspection result generation unit 213 that generates an inspection result of the vehicle 100.

The external sensor 300 is located outside of the vehicle 100. The external sensor 300 is used to detect a position of the vehicle 100. In this embodiment, the external sensor 300 is a camera in a factory FC. The external sensor 300 includes a communication device not illustrated and communicates with the server device 200 by wired or wireless communication.

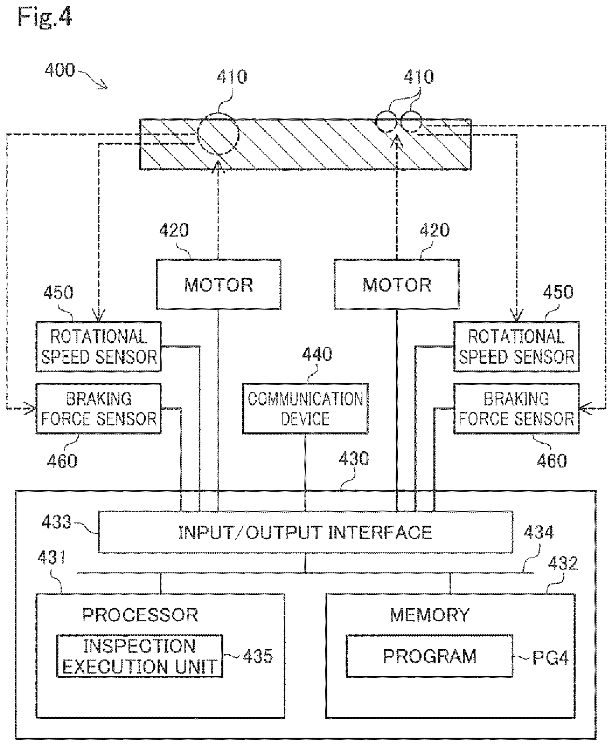

Fig. 4 is an explanatory diagram illustrating a configuration of the inspection equipment 400. The inspection equipment 400 is equipment to inspect the vehicle 100. In this embodiment, the inspection equipment 400 includes a roller 410, a motor 420 that rotates the roller 410, an equipment control device 430 that controls each part of the inspection equipment 400, a communication device 440 that communicates with an external device, a rotational speed sensor 450 that detects rotational speed of the roller 410, and a braking force sensor 460 that detects braking force of the vehicle 100 applied to the roller 410. In this embodiment, the inspection equipment 400 has at least one of a function as a drum tester and a function as a brake tester. The drum tester causes the wheel 101 to drivingly rotate to followingly rotate the roller 410, thus inspecting drive performance of the vehicle 100. The brake tester causes the roller 410 to drivingly rotate to followingly rotate the wheel 101, thus inspecting brake performance of the vehicle 100. However, in a case in which the inspection equipment 400 does not have the function as the brake tester, the inspection equipment 400 does not necessarily include the motor 420 and the braking force sensor 460.

The roller 410 is disposed on a road surface. The roller 410 is rotatable while supporting the wheel 101. In this embodiment, the inspection equipment 400 supports one front wheel by two small-diameter rollers and supports one rear wheel by one large-diameter roller. That is, in this embodiment, the inspection equipment 400 includes six rollers 410. Here, the small-diameter roller is the roller 410 with a smaller diameter, and the large-diameter roller is the roller 410 with a larger diameter. The inspection equipment 400 includes a plurality of motors 420. The plurality of motors 420 include the motor 420 that rotates the roller 410 for a front wheel and the motor 420 that rotates the roller 410 for a rear wheel. Note that the inspection equipment 400 may support one front wheel by one large-diameter roller and support one rear wheel by two small-diameter rollers, or may support one front wheel by two small-diameter rollers and support one rear wheel by two small-diameter rollers.

The equipment control device 430 includes a computer including a processor 431, a memory 432, an input/output interface 433, and an internal bus 434. The processor 431, the memory 432, and the input/output interface 433 are coupled to one another via the internal bus 434 in a bidirectionally communicable manner. The motor 420, the communication device 440, the rotational speed sensor 450, and the braking force sensor 460 are coupled to the input/output interface 433. In this embodiment, the communication device 440 communicates with the server device 200 by wireless or wired communication. The communication device 440 may communicate with the vehicle 100 by wireless communication.

The processor 431 executes a computer program PG4 stored in the memory 432 in advance, thus functioning as an inspection execution unit 435 that executes inspection of the vehicle 100. In this embodiment, the inspection execution unit 435 executes inspection of the vehicle 100 in accordance with a control signal transmitted from the server device 200. Specifically, the inspection execution unit 435 executes control of the motor 420, detection of rotational speed by the rotational speed sensor 450, and detection of braking force by the braking force sensor 460.

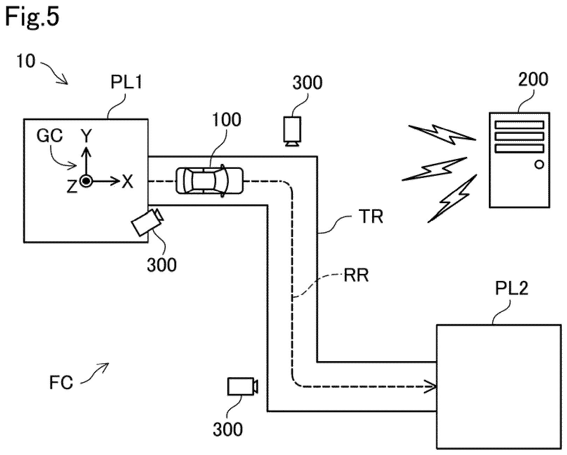

Fig. 5 is an explanatory diagram illustrating the vehicle 100 running in the factory FC by remote control. In this embodiment, the system 10 is used in the factory FC in which the vehicle 100 is produced. A reference coordinate system in the factory FC is a global coordinate system GC, and any position in the factory FC can be represented by X, Y, and Z coordinates in the global coordinate system GC. The factory FC includes a first place PL1 and a second place PL2. The first place PL1 and the second place PL2 are connected to one another through a track TR on which the vehicle 100 is runnable. In the factory FC, a plurality of external sensors 300 are disposed along the track TR. Positions of the respective external sensors 300 in the factory FC are adjusted in advance.

In this embodiment, the first place PL1 is a place at which the vehicle 100 is assembled. When the vehicle 100 is assembled at the first place PL1, at least the vehicle control device 110, the actuator group 120, and the communication device 130 are attached to the vehicle 100. Therefore, when the vehicle 100 is assembled at the first place PL1, the vehicle 100 is runnable by remote control. The vehicle 100 assembled at the first place PL1 is remotely controlled by the server device 200 to move from the first place PL1 to the second place PL2 through the track TR. The second place PL2 is a place at which the vehicle 100 is inspected. The inspection equipment 400 is disposed at the second place PL2. The vehicle 100 that has passed the inspection at the second place PL2 is then shipped from the factory FC.

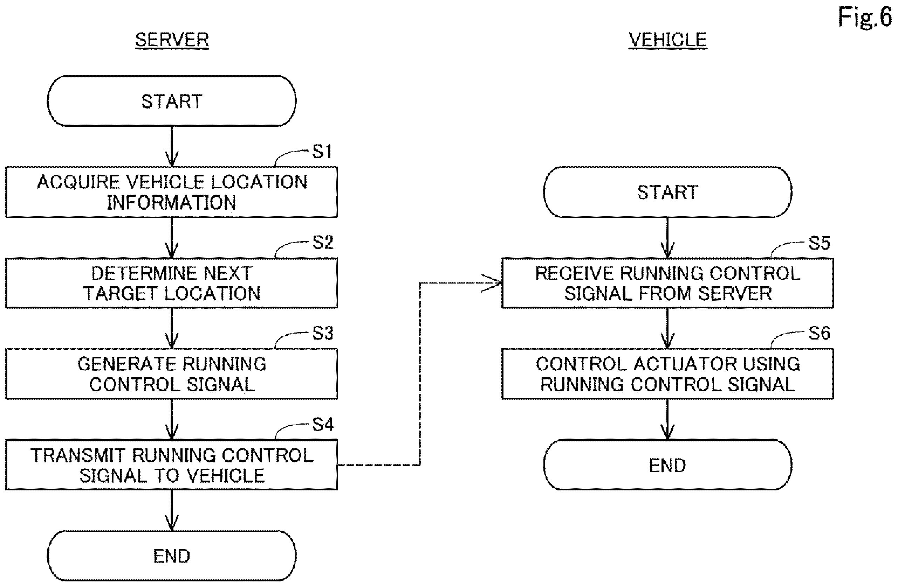

Fig. 6 is a flowchart showing a processing procedure for running control of the vehicle 100 in the first embodiment. In step S1, the processor 201 of the server device 200 acquires vehicle location information using detection result output from the external sensor 300. The external sensor 300 is located outside the vehicle 100. The vehicle location information is locational information as a basis for generating a running control signal. In the present embodiment, the vehicle location information includes the location and orientation of the vehicle 100 in the reference coordinate system of the factory FC. In the present embodiment, the reference coordinate system of the factory FC is the global coordinate system GC and a location in the factory FC can be expressed by X, Y, and Z coordinates in the global coordinate system GC. In the present embodiment, the external sensor 300 is a camera that is disposed in the factory FC and outputs a captured image as detection result. In step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 10 or outside the system 10. The detection model DM is stored in advance in the memory 202 of the server device 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model DM and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server device 200 determines a target location to which the vehicle 100 is to move next. In the present embodiment, the target location is expressed by X, Y, and Z coordinates in the global coordinate system GC. The memory 202 of the server device 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The server device 200 determines the target location on the reference route RR ahead of a current location of the vehicle 100.

In step S3, the processor 201 of the server device 200 generates a running control signal for causing the vehicle 100 to run toward the determined target location. In the present embodiment, the running control signal includes an acceleration and a steering angle of the vehicle 100 as parameters. the processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR. In other embodiments, the running control signal may include the speed of the vehicle 100 as a parameter instead of or in addition to the acceleration of the vehicle 100.

In step S4, the processor 201 of the server device 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle control device 110 receives the running control signal transmitted from the server device 200. In step S6, the processor 111 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 10 in the present embodiment, it becomes possible to move the vehicle 100 without using a transport unit such as a crane or a conveyor.

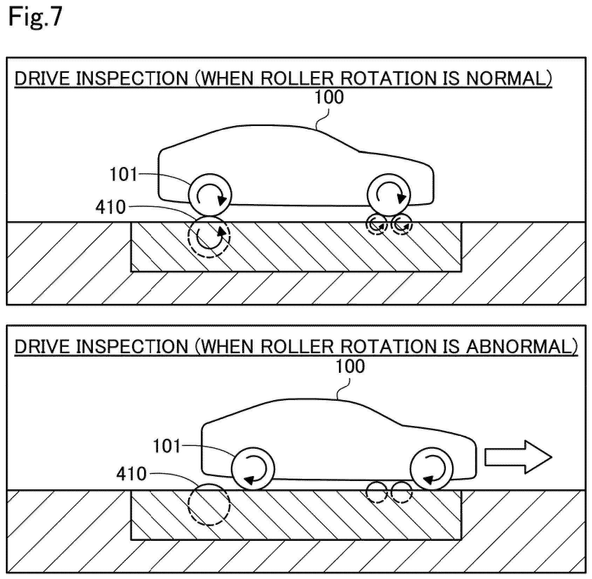

Fig. 7 is an explanatory diagram illustrating a drive inspection to inspect drive performance of the vehicle 100. As illustrated in an upper part of Fig. 7, as the drive inspection starts, the vehicle remote control unit 211 of the server device 200 drivingly rotates the wheel 101 to followingly rotate the roller 410 while the wheel 101 is supported by the roller 410. In the drive inspection, a shift position of the vehicle 100 is set to a drive range (D range) or a reverse range (R range). In the drive inspection, circumferential speed of the wheel 101 that drivingly rotates and circumferential speed of the roller 410 that followingly rotates are the same as one another. This causes the vehicle 100 to stay on the roller 410. The vehicle remote control unit 211 remotely controls the vehicle 100 so that rotational speed of the wheel 101 reaches a target rotational speed defined in advance. After the rotational speed of the wheel 101 reaches the target rotational speed, the vehicle remote control unit 211 stops rotation of the wheel 101. As the wheel 101 stops rotating, the roller 410 stops rotating. The equipment remote control unit 212 of the server device 200 remotely controls the inspection equipment 400 to detect rotational speed of the roller 410 by using the rotational speed sensor 450. The inspection result generation unit 213 of the server device 200 uses a detection result of the rotational speed of the roller 410 to generate an inspection result of the drive performance of the vehicle 100. The inspection result of the drive performance includes at least one of information on whether the driving device of the vehicle 100 operates correctly and information on whether a speedometer of the vehicle 100 shows a correct value.

As illustrated in a lower part of Fig. 7, during the drive inspection in which the wheel 101 is drivingly rotated to followingly rotate the roller 410, in a case in which the roller 410 becomes non-rotatable due to abnormality of the inspection equipment 400, driving power of the driving device of the vehicle 100 to rotate the wheel 101 generates propulsion force in the vehicle 100. This may cause the vehicle 100 to fall out of the roller 410.

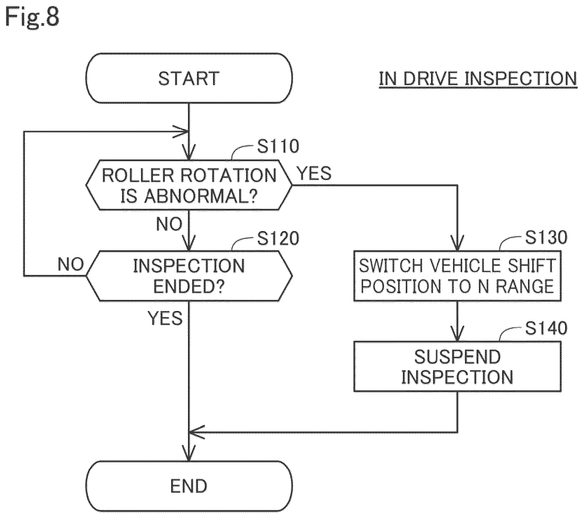

Fig. 8 is a flowchart illustrating a procedure for falling-out prevention control executed during the drive inspection. As the drive inspection starts, the falling-out prevention control illustrated in Fig. 8 starts. At Step S110, the server device 200 determines whether abnormality has occurred in rotation of the roller 410 supporting the wheel 101 under driving rotation. In this embodiment, the server device 200 uses a detection result of the rotational speed sensor 450 to determine whether abnormality has occurred in rotation of the roller 410. At Step S110, if it is not determined that abnormality has occurred in rotation of the roller 410, at Step S120, the server device 200 determines whether the drive inspection has ended. At Step S120, if it is not determined that the drive inspection has ended, the server device 200 returns the process to Step S110. On the other hand, at Step S120, if it is determined that the drive inspection has ended, the server device 200 ends the falling-out prevention control.

At Step S110, if it is determined that abnormality has occurred in rotation of the roller 410, at Step S130, the server device 200 remotely controls the vehicle 100 to switch the shift position of the vehicle 100 to a neutral range (N range). Switching of the shift position of the vehicle 100 to the neutral range blocks transmission of driving power from the driving device of the vehicle 100 to the wheel 101. In order that driving power to rotate the wheel 101 does not cause the vehicle 100 to fall out of the roller 410, preferably, the server device 200 immediately switches the shift position of the vehicle 100 to the neutral range. Preferably, in addition to switching the shift position of the vehicle 100 to the neutral range, the server device 200 actuates the braking device of the vehicle 100. At Step S140, the server device 200 suspends the drive inspection. Then, the server device 200 ends the falling-out prevention control.

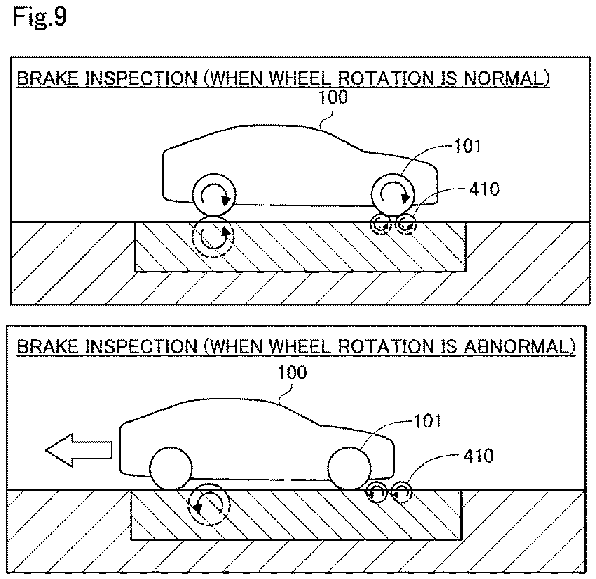

Fig. 9 is an explanatory diagram illustrating a brake inspection to inspect brake performance of the vehicle 100. As illustrated in an upper part of Fig. 9, as the brake inspection starts, the equipment remote control unit 212 of the server device 200 drivingly rotates the roller 410 to followingly rotate the wheel 101 while the wheel 101 is supported by the roller 410. In the brake inspection, the shift position of the vehicle 100 is set to the neutral range (N range). In the brake inspection, circumferential speed of the roller 410 that drivingly rotates and circumferential speed of the wheel 101 that followingly rotates are the same as one another. This causes the vehicle 100 to stay on the roller 410. The equipment remote control unit 212 remotely controls the inspection equipment 400 so that rotational speed of the roller 410 reaches a target rotational speed defined in advance. Once the rotational speed of the roller 410 reaches the target rotational speed, the vehicle remote control unit 211 of the server device 200 remotely controls the vehicle 100 to actuate the braking device of the vehicle 100, and the equipment remote control unit 212 of the server device 200 stops transmission of driving power from the motor 420 to the roller 410. At this time, preferably, the vehicle remote control unit 211 actuates the braking device in such a manner that the wheel 101 and the roller 410 stop abruptly. The equipment remote control unit 212 uses the braking force sensor 460 to detect braking force applied from the braking device of the vehicle 100 to the roller 410. The inspection result generation unit 213 of the server device 200 uses a detection result of the braking force to generate an inspection result of the brake performance of the vehicle 100. The inspection result of the brake performance includes information on whether the braking device of the vehicle 100 operates correctly.

As illustrated in a lower part of Fig. 9, during the brake inspection in which the roller 410 is drivingly rotated to followingly rotate the wheel 101, in a case in which the wheel 101 becomes non-rotatable due to abnormality of the vehicle 100, driving power to rotate the roller 410 by the motor 420 generates propulsion force in the vehicle 100. This may cause the vehicle 100 to fall out of the roller 410.

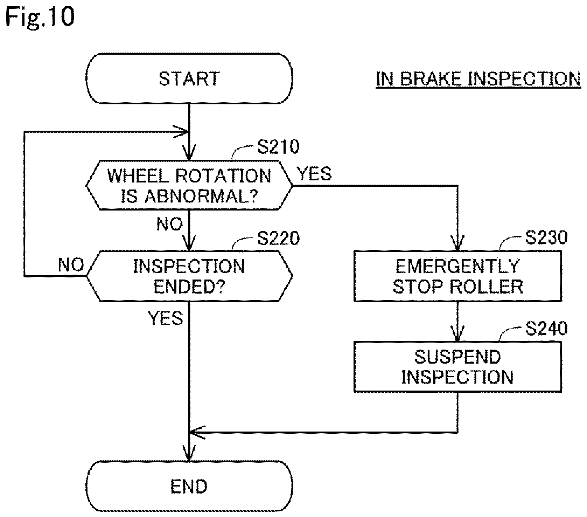

Fig. 10 is a flowchart illustrating a procedure for falling-out prevention control executed during the brake inspection. As the brake inspection starts, the falling-out prevention control illustrated in Fig. 10 starts. At Step S210, the server device 200 determines whether abnormality has occurred to rotation of the wheel 101 supported by the roller 410 under driving rotation. In this embodiment, the server device 200 uses a detection result of the wheel speed sensor 140 to determine whether abnormality has occurred in rotation of the wheel 101. At Step S210, if it is not determined that abnormality has occurred in rotation of the wheel 101, at Step S220, the server device 200 determines whether the brake inspection has ended. At Step S220, if it is not determined that the brake inspection has ended, the server device 200 returns the process to Step S210. On the other hand, at Step S220, if it is determined that the brake inspection has ended, the server device 200 ends the falling-out prevention control.

At Step S210, if it is determined that abnormality has occurred in rotation of the wheel 101, at Step S230, the server device 200 remotely controls the inspection equipment 400 to stop rotation of the roller 410. In order that driving power to rotate the roller 410 does not cause the vehicle 100 to fall out of the roller 410, preferably, the server device 200 immediately stop rotation of the roller 410. At Step S240, the server device 200 suspends the brake inspection. Then, the server device 200 ends the falling-out prevention control.

With the system 10 according to this embodiment described above, during inspection in which one of the wheel 101 and the roller 410 is drivingly rotated to followingly rotate the other one of the wheel 101 and the roller 410, in a case in which abnormality of stopping of the following rotation is detected, the server device 200 stops the driving rotation. Accordingly, it can be suppressed that the vehicle 100 under the inspection falls out of the roller 410.

Specifically, in this embodiment, during the drive inspection in which the wheel 101 is drivingly rotated to followingly rotate the roller 410, in a case in which abnormality that the roller 410 becomes non-rotatable due to abnormality of the inspection equipment 400 is detected, the server device 200 remotely controls the vehicle 100 to switch the shift position of the vehicle 100 to the N range and block transmission of driving power from the driving device of the vehicle 100 to the wheel 101. Accordingly, it can be suppressed that the vehicle 100 falls out of the roller 410.

Moreover, in this embodiment, during the brake inspection in which driving rotation of the roller 410 causes the wheel 101 to followingly rotate, in a case in which abnormality that the wheel 101 becomes non-rotatable due to abnormality of the vehicle 100 is detected, the server device 200 remotely controls the inspection equipment 400 to stop rotation of the roller 410. Accordingly, it can be suppressed that the vehicle 100 falls out of the roller 410. Note that rotation of the roller 410 is not necessarily fully stopped as long as the rotation of the roller 410 is sufficiently decelerated. In this case, force for the vehicle 100 under the inspection to fall out of the roller 410 can be weakened.

### B. Second Embodiment

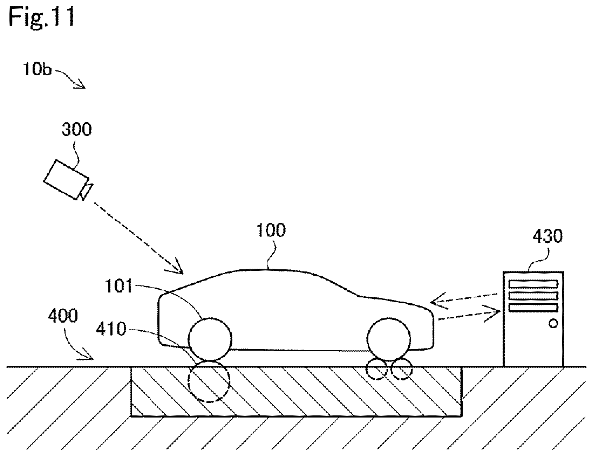

Fig. 11 is an explanatory diagram illustrating a configuration of a system 10b according to a second embodiment. The second embodiment is different from the first embodiment in that the vehicle 100 does not run by remote control from the server device 200, but runs by autonomous control of the vehicle 100. Other configurations are similar to those of the first embodiment unless otherwise described. Note that in the second embodiment, the vehicle control device 110 corresponds to the "control device" according to the present disclosure.

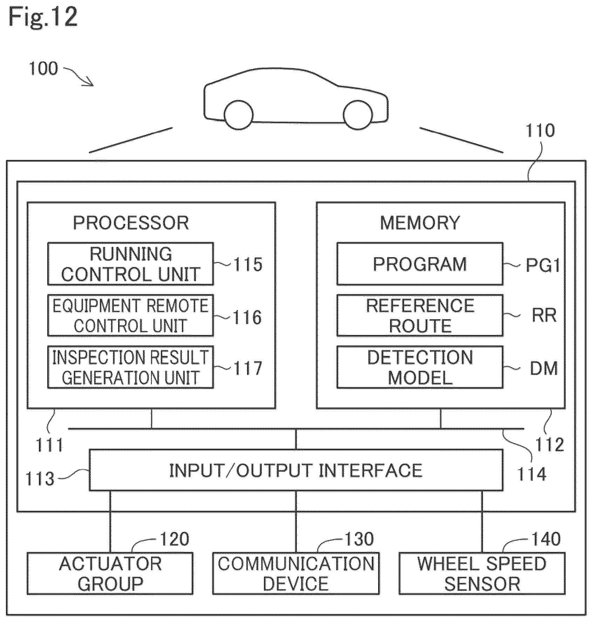

Fig. 12 is an explanatory diagram illustrating a configuration of the vehicle 100 according to the second embodiment. In this embodiment, the memory 112 of the vehicle control device 110 stores a reference route RR and a detection model DM in advance. The communication device 130 communicates with the external sensor 300 and the inspection equipment 400 by wireless communication. The processor 111 executes the computer program PG1 stored in the memory 112 in advance, thus functioning as the running control unit 115, an equipment remote control unit 116, and an inspection result generation unit 117. The equipment remote control unit 116 remotely controls the inspection equipment 400. The inspection result generation unit 117 generates an inspection result of the vehicle 100.

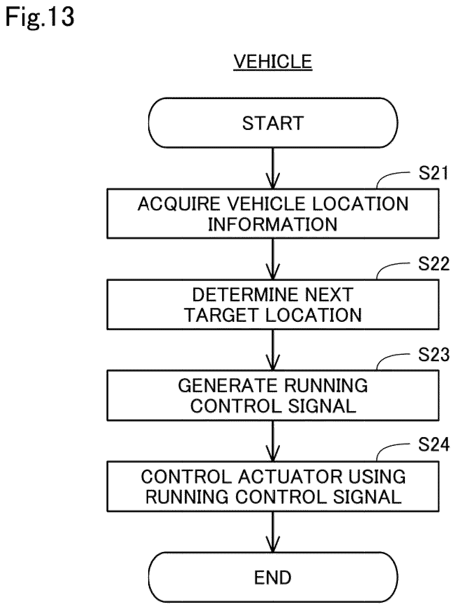

Fig. 13 is a flowchart showing a processing procedure for running control of the vehicle 100 in the second embodiment. In step S21, the processor 111 of the vehicle control device 110 acquires vehicle location information using detection result output from the camera as the external sensor 300. In step S22, the processor 111 determines a target location to which the vehicle 100 is to move next. In step S23, the processor 111 generates a running control signal for causing the vehicle 100 to run to the determined target location. In step S24, the processor 111 controls the actuator group 120 using the generated running control signal, thereby causing the vehicle 100 to run by following a parameter indicated by the running control signal. The processor 111 repeats the acquisition of vehicle location information, the determination of a target location, the generation of a running control signal, and the control over the actuator group 120 in a predetermined cycle. According to the system 10b in the present embodiment, it is possible to cause the vehicle 100 to run by autonomous control without controlling the vehicle 100 remotely using the server device 200.

As illustrated in Fig. 11, in the system 10b, the vehicle 100 remotely controls the inspection equipment 400 to execute a drive inspection and a brake inspection of the vehicle 100. The falling-out prevention control illustrated in Figs. 8 and 10 is executed by the vehicle control device 110 of the vehicle 100. Specifically, in this embodiment, during the drive inspection in which the wheel 101 is drivingly rotated to followingly rotate the roller 410, in a case in which abnormality that the roller 410 becomes non-rotatable due to abnormality of the inspection equipment 400 is detected, the vehicle 100 autonomously switches the shift position of the vehicle 100 to the N range and blocks transmission of driving power from the driving device of the vehicle 100 to the wheel 101. Moreover, in this embodiment, during the brake inspection in which driving rotation of the roller 410 causes the wheel 101 to followingly rotate, in a case in which abnormality that the wheel 101 becomes non-rotatable due to abnormality of the vehicle 100 is detected, the vehicle 100 remotely controls the inspection equipment 400 to stop rotation of the roller 410.

With the system 10b according to this embodiment described above, it can be suppressed that the vehicle 100 falls out of the roller 410 during the drive inspection and during the brake inspection.

Note that, in another embodiment, in the system 10b, the falling-out prevention control illustrated in Figs. 8 and 10 may be executed by the equipment control device 430 of the inspection equipment 400. In this case, the equipment control device 430 corresponds to the "control device" according to the present disclosure. Specifically, during the drive inspection in which the wheel 101 is drivingly rotated to followingly rotate the roller 410, in a case in which abnormality that the roller 410 becomes non-rotatable due to abnormality of the inspection equipment 400 is detected, the inspection equipment 400 may remotely control the vehicle 100 to switch the shift position of the vehicle 100 to the N range and block transmission of driving power from the driving device of the vehicle 100 to the wheel 101. Moreover, during the brake inspection in which driving rotation of the roller 410 causes the wheel 101 to followingly rotate, in a case in which abnormality that the wheel 101 becomes non-rotatable due to abnormality of the vehicle 100 is detected, the inspection equipment 400 may autonomously stop rotation of the roller 410. Even in this embodiment, it can be suppressed that the vehicle 100 falls out of the roller 410 during the drive inspection and during the brake inspection.

Moreover, in another embodiment, for example, a torque sensor that detects torque applied to the wheel 101 and/or the roller 410 may detect abnormality of stopping of following rotation. In this case, the torque sensor corresponds to the "detector" according to the present disclosure.

### C. Other Embodiments

(C1) In each of the above-described embodiments, the external sensor 300 is not limited to the camera but may be the distance measuring device, for example. The distance measuring device is a light detection and ranging (LiDAR) device, for example. In this case, detection result output from the external sensor 300 may be three-dimensional point cloud data representing the vehicle 100. The server device 200 and the vehicle 100 may acquire the vehicle location information through template matching using the three-dimensional point cloud data as the detection result and reference point cloud data, for example.

(C2) In the above-described first embodiment, the server device 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server device 200 may acquire vehicle location information, determine a target location to which the vehicle 100 is to move next, and generate a route from a current location of the vehicle 100 indicated by the acquired vehicle location information to the target location. The server device 200 may generate a route to the target location between the current location and a destination or generate a route to the destination. The server device 200 may transmit the generated route to the vehicle 100. The vehicle 100 may generate a running control signal in such a manner as to cause the vehicle 100 to run along the route received from the server device 200 and control the actuator group 120 using the generated running control signal.
(2) The server device 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server device 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(C3) In the above-described second embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(C4) In the above-described second embodiment, the vehicle 100 acquires vehicle location information using detection result from the external sensor 300. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 120 of the vehicle 100 using the generated running control signal. In this case, the vehicle 100 is capable of running without using any detection result from the external sensor 300. The vehicle 100 may acquire target arrival time or traffic congestion information from outside the vehicle 100 and reflect the target arrival time or traffic congestion information in at least one of the route and the running control signal.

(C5) In the above-described first embodiment, the server device 200 automatically generates a running control signal to be transmitted to the vehicle 100. By contrast, the server device 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server device 200 through wire communication or wireless communication, for example, and the server device 200 may generate a running control signal responsive to the operation on the operating device.

(C6) In each of the above-described embodiments, the vehicle 100 is simply required to have a configuration to become movable by unmanned driving. The vehicle 100 may embodied as a platform having the following configuration, for example. More specifically, in order to fulfill three functions including "run," "turn," and "stop" by unmanned driving, the vehicle 100 is simply required to include at least the vehicle control device 110 and the actuator group 120. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(C7) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(C8) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(C9) In each of the above embodiments, some or all of the functions and processes implemented by software may be implemented by hardware. Also, some or all of the functions and processes implemented by hardware may be implemented by software. As hardware for implementing the various functions in each of the above embodiments, various circuits such as integrated circuits and discrete circuits may be used.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

## Claims

1. A system (10; 10b) comprising:
a vehicle (100) configured to be runnable by unmanned driving;
inspection equipment (400) comprising a roller (410), wherein the roller is configured to be rotatable while supporting a wheel (101) of the vehicle;
a detector (140; 460) configured to detect abnormality of at least one of the vehicle and the inspection equipment; and
a control device (200; 110; 430) configured to control rotation of at least one of the wheel and the roller, wherein, during inspection in which one of the wheel and the roller is drivingly rotated to followingly rotate another one of the wheel and the roller, when abnormality that rotation of the another one of the wheel and the roller stops is detected, the control device decelerates rotation of the one of the wheel and the roller.

2. The system according to claim 1, wherein, during inspection in which the wheel is drivingly rotated to followingly rotate the roller, when abnormality that rotation of the roller stops is detected, the control device (200; 110; 430) stops driving of the wheel.

3. The system according to claim 1, wherein, during inspection in which the roller is drivingly rotated to followingly rotate the wheel, when abnormality that rotation of the wheel stops is detected, the control device (200; 110; 430) stops rotation of the roller.

4. A control method comprising:
detecting abnormality of at least one of a vehicle and inspection equipment, wherein the vehicle is configured to be runnable by unmanned driving, wherein the inspection equipment comprising a roller, wherein the roller is configured to be rotatable while supporting a wheel of the vehicle; and
controlling rotation of at least one of the wheel and the roller, wherein, during inspection in which one of the wheel and the roller is drivingly rotated to followingly rotate another one of the wheel and the roller, when abnormality that rotation of the another one of the wheel and the roller stops is detected, the controlling decelerates rotation of the one of the wheel and the roller.
